# EUROPEAN PATENT APPLICATION

(11) **EP 4 645 472 A1**
(43) Date of publication of application: **05.11.2025**
(21) Application number: 22969891.5
(22) Date of filing: 30.12.2022
(51) Int. Cl.: H01M 4/62, H01M 4/13, H01M 10/0525

(54) **ELECTRODE, SECONDARY BATTERY, AND ELECTRONIC DEVICE**

(71) Applicant: Ningde Amperex Technology Limited, Zhangwan Town, Jiaocheng District Ningde City Fujian 352100 (CN)
(72) Inventor: CHENG, Wenqiang, Ningde City, Fujian 352100 (CN); HAN, Dongdong, Ningde City, Fujian 352100 (CN); CAI, Xiaohu, Ningde City, Fujian 352100 (CN); WANG, Kefei, Ningde City, Fujian 352100 (CN)
(74) Representative: Icosa
(86) International application number: PCT/CN2022/144362
(87) International publication number: WO 2024/138751

(57) **Abstract**

An electrode includes: an electrode active material layer, the electrode active material layer including an electrode active material and a conductive agent, where the conductive agent includes carbon nanotube clusters, the carbon nanotube clusters being composed of a plurality of bundled carbon nanotube units, and a diameter of the carbon nanotube clusters is greater than 0.2 µm.

## Description

### TECHNICAL FIELD

The present application relates to the field of battery technology, and more specifically, to an electrode, a secondary battery, and an electronic device.

### BACKGROUND

Lithium-ion batteries are widely used in digital electronic products, energy storage systems, drones, power tools, and electric vehicles due to their characteristics such as high energy density, long cycle life, high safety, and fast charging capability.

Conductive agents are commonly added to the electrodes of lithium-ion batteries to enhance the conductivity of the electrodes. However, after long-term cycling, the conductivity of the electrodes decreases, leading to increased polarization and, consequently, the problem of cycle capacity fade.

Therefore, improving the conductivity of electrodes is an issue that needs to be addressed in this field.

### SUMMARY

The present application provides an electrode, a secondary battery, and an electronic device. The electrode exhibits good conductivity, which can enhance the charging rate of the battery cell, and can reduce polarization during the cycling process of the battery cell, thereby mitigating the cycle capacity fade issue caused by polarization.

A first aspect of the present application provides an electrode, including: an electrode active material layer, the electrode active material layer including an electrode active material and a conductive agent,
where the conductive agent includes carbon nanotube clusters, the carbon nanotube clusters being composed of a plurality of bundled carbon nanotube units, and a diameter of the carbon nanotube clusters being > 0.2 µm.

According to the present application, the electrode active material layer includes carbon nanotube clusters as a conductive agent, where the carbon nanotube clusters have a structure composed of a plurality of bundled carbon nanotube units with a diameter greater than 0.2 µm. This structure can form a long-range conductive network within the electrode active material layer, enhancing electron transport paths, thereby enabling the electrode to exhibit good conductivity, increasing the charging rate of the battery cell, reducing polarization during the cycling process of the battery cell, and consequently mitigating the cycle capacity fade issue caused by polarization, thus improving the service life of the battery cell.

In some embodiments of the present application, a mass percentage of the carbon nanotube clusters in the electrode active material layer is from 0.05% to 5%.

In some embodiments of the present application, an average diameter d of the carbon nanotube units satisfies 3 nm ≤ d ≤ 40 nm;
optionally, the average diameter d of the carbon nanotube units satisfies 5 nm ≤ d ≤ 20 nm; and
optionally, the average diameter d of the carbon nanotube units satisfies 5 nm ≤ d ≤ 10 nm.

In some embodiments of the present application, the carbon nanotube units are multi-walled carbon nanotube units.

In some embodiments of the present application, an average diameter D of the carbon nanotube clusters is ≥ 0.5 µm; and
optionally, the average diameter D of the carbon nanotube clusters satisfies 0.5 µm ≤ D ≤ 3 µm.

In some embodiments of the present application, an average length L of the carbon nanotube clusters is ≥ 3 µm;
optionally, the average length L of the carbon nanotube clusters is ≥ 5 µm; and
optionally, the average length L of the carbon nanotube clusters satisfies 5 µm ≤ L ≤ 30 µm.

In some embodiments of the present application, a particle size Dv50 of the electrode active material and the average length L of the carbon nanotube clusters satisfy: L ≥ 0.2 × Dv50.

In some embodiments of the present application, the conductive agent further includes a second conductive agent, the second conductive agent may include one or more of conductive carbon black, acetylene black, discrete carbon nanotubes, carbon fibers, Ketjen black, and graphene, and a mass percentage of the second conductive agent in the electrode active material layer is from 0.05% to 5%.

In some embodiments of the present application, the electrode active material layer further includes a binder, and a mass percentage of the binder in the electrode active material layer is from 0.5% to 10%.

In some embodiments of the present application, a porosity k of the electrode active material layer satisfies 10% ≤ k ≤ 35%; and
optionally, the porosity k of the electrode active material layer satisfies 15% ≤ k ≤ 30%.

In some embodiments of the present application, the porosity k of the electrode active material layer, an average length L of the carbon nanotube clusters, and an average diameter D of the carbon nanotube clusters satisfy: L/D × k ≥ 0.5, optionally, 0.8 ≤ L/D × k ≤ 1.6.

A second aspect of the present application provides a secondary battery including: a positive electrode, a negative electrode, a separator, and an electrolyte;
where at least one of the positive electrode or the negative electrode is an electrode according to any embodiment of the first aspect.

In some embodiments of the present application, the positive electrode is an electrode according to any embodiment of the first aspect.

In some embodiments of the present application, when the secondary battery is at 0% SOC, the resistance of the positive electrode is R0, and when the secondary battery is at 100% SOC, the resistance of the positive electrode is R100,
where R0 and R100 satisfy: (R₀ - R₁₀₀)/R₀ ≤ 30%.

A third aspect of the present application provides an electronic device, including: the secondary battery according to any embodiment of the second aspect.

### DESCRIPTION OF DRAWINGS

To describe the technical solutions in embodiments of the present application more clearly, the following briefly describes the accompanying drawings required for describing embodiments of the present application. Apparently, the accompanying drawings in the following description show merely some embodiments of the present application, and a person of ordinary skill in the art may still derive other drawings from the accompanying drawings without creative efforts.
FIG. 1 is a low-magnification scanning electron microscope image of an electrode provided by an embodiment of the present application.
FIG. 2 is a high-magnification scanning electron microscope image of an electrode provided by an embodiment of the present application.

### DETAILED DESCRIPTION

To make the objectives, technical solutions, and advantages of embodiments of the present application clearer, the following clearly describes the technical solutions in embodiments of the present application with reference to the accompanying drawings in embodiments of the present application. Apparently, embodiments described are some rather than all embodiments of the present application. All other embodiments obtained by a person of ordinary skill in the art based on embodiments of the present application without creative efforts shall fall within the protection scope of the present application.

Unless otherwise defined, all technical and scientific terms used in the present application shall have the same meanings as commonly understood by those skilled in the art to which the present application relates. The terms used in the specification of the present application are intended to merely describe the specific embodiments rather than to limit the present application. The terms "include", "comprise", "have", and any variations thereof in the specification and claims of the present application as well as the foregoing description of drawings are intended to cover non-exclusive inclusions. In the specification, claims, or accompanying drawings of the present application, the terms "first", "second", and the like are intended to distinguish between different objects rather than to describe a particular order or a primary-secondary relationship.

Reference to "embodiment" in the present application means that specific features, structures, or characteristics described with reference to the embodiment may be included in at least one embodiment of the present application. The word "embodiment" appearing in various positions in the specification does not necessarily refer to the same embodiment or an independent or alternative embodiment that is exclusive of other embodiments.

In the description of the present application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in the present application as appropriate to specific situations.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between contextually associated objects.

In embodiments of the present application, the same reference signs denote the same members. For brevity, in different embodiments, detailed descriptions of the same members are not repeated. It should be understood that, as shown in the accompanying drawings, sizes such as thickness, length, and width of various members and sizes such as thickness, length, and width of integrated devices in embodiments of the present application are merely for illustrative purposes and should not constitute any limitations on the present application.

In the present application, "a plurality of" means more than two (inclusive).

The battery cell in the present application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in embodiments of the present application. The battery cell may be cylindrical, flat, cuboid, or of other shapes, which is not limited in embodiments of the present application either.

Currently, one of the main development directions of lithium-ion batteries is to improve their charge-discharge efficiency and cycle life, where electrode polarization is an important factor restricting their development.

Generally speaking, the better the conductivity of an electrode, the less the polarization of the electrode. Therefore, improving the conductivity of the electrode is an effective way to reduce electrode polarization. To this end, conductive agents are commonly added to electrodes in the prior art, but an excessive amount of added conductive agent affects the energy density of the electrode. Thus, there is a need for a conductive agent that can achieve good conductivity with a smaller addition amount. Currently, commonly used conductive agents mainly include carbon black, graphene, and carbon nanotubes, with carbon nanotubes further divided into multi-walled carbon nanotubes and single-walled carbon nanotubes.

Carbon black conducts electricity mainly through point contact with the electrode active material, graphene conducts electricity through surface contact with the electrode active material, and carbon nanotubes conduct electricity through line contact with the electrode active material. The conductive network formed by point contact is not stable; as charging and discharging proceed, volume changes in the electrode active material will destroy the original conductive network, deteriorating the conductivity. The conductive network formed by surface contact is relatively stable but affects the migration rate of the electrolyte in the electrode and is not conducive to forming a long-range conductive network, resulting in a longer ion transport path. The conductive network formed by line contact can overcome the above shortcomings and effectively improve the conductivity of the electrode. However, although single-walled carbon nanotubes have high conductivity, their structure is easily damaged during charging and discharging, reducing conductivity. Multi-walled carbon nanotubes, while structurally more stable, are prone to breaking during dispersion, failing to form a complete long-range conductive path, thus also having certain limitations in application.

In this regard, after in-depth consideration and extensive experimentation, the inventors provide an electrode using carbon nanotube clusters with a diameter greater than 0.2 µm as a conductive agent. These carbon nanotube clusters can form a stable long-range conductive network in the electrode active material layer, enhancing electron transport paths, thereby enabling the electrode to exhibit good conductivity. When applied to a secondary battery, this can reduce the impact of electrode polarization on the battery cell, enabling the secondary battery to have a faster charging-discharging rate and cycle life.

### Electrode

A first aspect of the present application provides an electrode, including: an electrode active material layer, the electrode active material layer including an electrode active material and a conductive agent,
where the conductive agent includes carbon nanotube clusters, the carbon nanotube clusters being composed of a plurality of bundled carbon nanotube units, and a diameter of the carbon nanotube clusters being > 0.2 µm.

According to the present application, the electrode active material layer includes carbon nanotube clusters as a conductive agent, where the carbon nanotube clusters have a structure composed of a plurality of bundled carbon nanotube units with a diameter greater than 0.2 µm. This structure can form a long-range conductive network within the electrode active material layer, enhancing electron transport paths, thereby enabling the electrode to exhibit good conductivity, increasing the charging rate of the battery cell, reducing polarization during the cycling process of the battery cell, and consequently mitigating the cycle capacity fade issue caused by polarization, thus improving the service life of the battery cell.

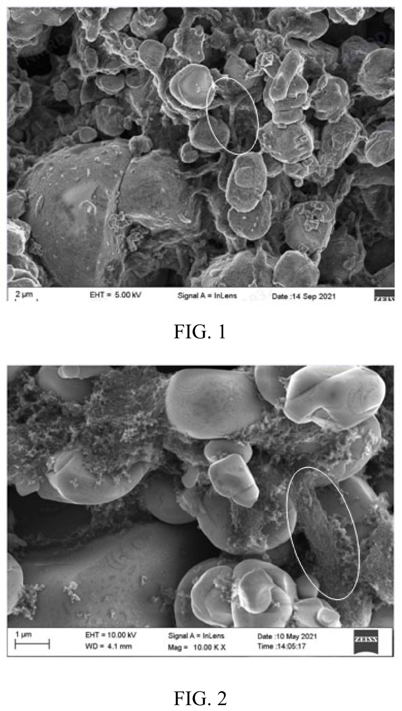

In the context of the present application, "carbon nanotube cluster" refers to a structure composed of multiple carbon nanotube units arranged in bundles and bonded together, where the long axes of the carbon nanotube units are parallel to each other and the diameter of the structure > 0.2 µm. As shown in FIGs. 1 and 2, which are scanning electron microscope images of the electrode at different magnifications in some embodiments of the present application. FIG. 1 clearly shows the presence of the aforementioned carbon nanotube clusters in the electrode, while FIG. 2 shows that these carbon nanotube clusters are composed of multiple carbon nanotube units arranged in bundles and bonded together. Prior to the present application, carbon nanotubes had been used as a conductive agent in electrode active material layers. Due to their extremely high aspect ratio and specific surface area, carbon nanotubes tend to agglomerate easily. Thus, conventional carbon nanotube raw materials are typically provided in the form of aggregates. According to teachings prior to the present application, to leverage the conductive properties of carbon nanotubes, carbon nanotubes are required to be uniformly dispersed in the electrode active material layer as individual carbon nanotube units. To achieve this, a dispersion of carbon nanotube conductive agent in a dispersant is typically prepared under dispersion conditions that ensure the carbon nanotube units are fully dispersed in the dispersant, such that carbon nanotube clusters are either not formed or are minimally formed (in other words, even if clusters similar to those provided in the present application are unintentionally formed, their content is very low). This carbon nanotube conductive agent dispersion is then thoroughly mixed with the electrode active material and other additives to form an electrode active material slurry, which is subsequently applied and dried to form the electrode active material layer. As described above, in the electrode active material layer formed this way, the carbon nanotubes are essentially uniformly dispersed as individual carbon nanotube units in the electrode active material layer, with no or virtually no presence (in other words, even if carbon nanotube clusters similar to those provided in the present application are unintentionally formed, their mass percentage in the electrode active material layer is far below 0.05%) of carbon nanotube clusters with a diameter > 0.2 µm.

According to the present application, the carbon nanotube clusters have a diameter greater than 0.2 µm and possess high mechanical strength, enabling the formation of a stable conductive network in the electrode active material layer. Whether the carbon nanotube units composing the carbon nanotube clusters are single-walled or multi-walled carbon nanotubes, such a conductive network is not easily affected by volume changes of the active material during the charging and discharging process of the battery cell. At the same time, the conductive network can suppress volume changes of the electrode active material during charging and discharging, thereby preventing cracks in the electrode active material. Even if cracks occur in the electrode active material, the carbon nanotube clusters can bridge the cracks to connect the electrode active material, ensuring the normal pathway of the conductive network. Additionally, the presence of the conductive network can suppress the peeling of the active material from the current collector, improving electrode adhesion and enabling the electrode to exhibit good conductivity.

Furthermore, carbon nanotube clusters with a larger diameter are less prone to bending or entanglement when dispersed in the electrode active material slurry, and due to their higher strength, they are not easily broken, thereby forming a stable long-range conductive network, enabling the electrode to exhibit good conductivity. If the diameter of the carbon nanotube clusters is too small, their high flexibility may cause them to agglomerate in the electrode active material slurry or wrap around the surface of the electrode active material, thereby hindering the formation of a long-range conductive network and affecting the electrical conductivity of the electrode.

In some embodiments, a mass percentage of the carbon nanotube clusters in the electrode active material layer is from 0.05% to 5%.

In some of the above embodiments, due to the good conductivity of the above-mentioned carbon nanotube clusters, a smaller addition amount in the electrode active material layer can form a good long-range conductive network, thereby increasing the content of the electrode active material in the electrode active material layer and thus improving the energy density of the electrode. Additionally, although the conductivity of the electrode improves with an increase in the addition amount of carbon nanotube clusters in the electrode active material layer, the addition amount should not be too high. This is because an excessively high addition amount would relatively reduce the content of the electrode active material. Moreover, due to the high strength of the carbon nanotube clusters and the formation of a conductive network in the electrode active material layer, an excessively high addition amount would lead to excessively high strength of the electrode active material layer, making it unsuitable for subsequent reprocessing of the electrode, such as winding treatment. Therefore, in some embodiments of the present application, the mass percentage of the carbon nanotube clusters in the electrode active material layer may be controlled to be from 0.05% to 5%. For example, the mass percentage of the carbon nanotube clusters in the electrode active material layer may be 0.05%, 0.1%, 0.15%, 0.2%, 0.3%, 0.4%, 0.5%, 1%, 1.5%, 2%, 2.5%, 3%, 3.5%, 4%, 4.5%, 5%, or within a range composed of any of the above values.

In some embodiments, an average diameter d of the carbon nanotube units satisfies 3 nm ≤ d ≤ 40 nm. For example, the average diameter of the carbon nanotube units may be 3 nm, 4 nm, 5 nm, 8 nm, 10 nm, 12 nm, 14 nm, 16 nm, 18 nm, 20 nm, 25 nm, 30 nm, 35 nm, 40 nm, or within a range formed by any of the above values.

In some of the above embodiments, the carbon nanotube clusters are formed by carbon nanotube units bonded to each other. When the average diameter of the carbon nanotube units is too small, during the preparation of the carbon nanotube clusters, the carbon nanotube units are relatively soft, making them prone to agglomeration and entanglement with other carbon nanotube units, which makes it difficult to obtain carbon nanotube clusters with sufficient strength and a diameter greater than 0.2 µm. Conversely, when the average diameter of the carbon nanotube units is too large, the carbon nanotube units are prone to deformation or even breakage during the preparation of the carbon nanotube clusters, making it challenging to achieve the carbon nanotube cluster length required to form a long-range conductive network, or even preventing the formation of carbon nanotube clusters altogether. Therefore, an average diameter d of the carbon nanotube units in the carbon nanotube clusters satisfies 3 nm ≤ d ≤ 40 nm, preferably 5 nm ≤ d ≤ 20 nm, and further preferably 5 nm ≤ d ≤ 10 nm.

It should be noted that, unless otherwise specified, the average diameter d of the carbon nanotube units in the carbon nanotube clusters as described in the present application refers to the average value of the diameters of the first 100 carbon nanotube units with larger diameters and the last 100 carbon nanotube units with larger diameters in observation of the prepared electrode by using a scanning electron microscope (SEM).

In some embodiments, the carbon nanotube units are multi-walled carbon nanotube units. Single-walled carbon nanotubes can be described as seamless hollow cylindrical tubes formed by rolling a single graphene sheet, typically with a diameter of 1 nm to 2 nm. Single-walled carbon nanotubes with larger diameters lead to structural instability and an increased number of defects. Additionally, the length of single-walled carbon nanotubes is generally on the micrometer scale, resulting in a very high aspect ratio and strong flexibility. During the preparation of carbon nanotube clusters, this flexibility makes them highly prone to agglomeration and entanglement, making it difficult to obtain carbon nanotube clusters with a diameter greater than 0.2 µm. Furthermore, the inventors have found that carbon nanotube clusters composed of single-walled carbon nanotube units, when applied in the electrode active material slurry, tend to entangle with other carbon nanotube clusters or the surface of the electrode active material, thereby affecting the electrical conductivity of the electrode. In contrast, multi-walled carbon nanotubes can be regarded as concentric arrangements of single-walled carbon nanotubes, that is, tubular structures seamlessly rolled from multiple graphene sheets. They generally have a larger diameter and possess a certain degree of strength, making them less prone to bending, twisting, kinking, or buckling. As a result, they are less likely to agglomerate or entangle, facilitating the preparation of carbon nanotube clusters with a diameter greater than 0.2 µm. Additionally, carbon nanotube clusters composed of multi-walled carbon nanotube units more readily form a conductive network in the electrode active material layer, enhancing the electrical conductivity of the electrode. Therefore, in some embodiments of the present application, carbon nanotube clusters formed by bonding multi-walled carbon nanotube units are preferably used as the conductive agent.

It is also worth mentioning that the production process for single-walled carbon nanotubes is more complex than that for multi-walled carbon nanotubes, resulting in lower yields and higher costs compared to multi-walled carbon nanotubes. Using multi-walled carbon nanotube units to form carbon nanotube clusters can effectively reduce costs.

In some embodiments, an average diameter D of the carbon nanotube clusters is ≥ 0.5 µm. For example, the average diameter of the carbon nanotube clusters may be 0.5 µm, 1 µm, 1.5 µm, 2 µm, 2.5 µm, 3 µm, 3.5 µm, or within a range formed by any of the above values.

In the electrode active material layer, when the average diameter D of the carbon nanotube clusters is ≥ 0.5 µm, their strength is high, and they are less likely to entangle with other carbon nanotube clusters or the electrode active material. This enables the formation of a long-range conductive network. Moreover, carbon nanotube clusters with a larger diameter can effectively mitigate the impact of volume changes in the electrode active material on the conductive network, ensuring that the conductive network remains highly efficient during the charging and discharging processes of the battery cell. This results in smooth electron conduction, reduced polarization, and improved electrical performance.

Further preferably, the average diameter D of the carbon nanotube clusters satisfies 0.5 µm ≤ D ≤ 3 µm. This is because if the diameter of the carbon nanotube clusters is too large, agglomeration may occur, requiring the addition of more carbon nanotube clusters to ensure uniform dispersion in the electrode active material layer to form a conductive network, which could affect the energy density of the electrode. Therefore, the diameter of the carbon nanotube clusters should not be excessively large.

It should be noted that, unless otherwise specified, the average diameter D of the carbon nanotube clusters as described in the present application refers to the average value of the diameters of the first 100 carbon nanotube clusters with larger diameters and the last 100 carbon nanotube clusters with larger diameters, as observed by SEM of the prepared electrode.

In some embodiments, an average length L of the carbon nanotube clusters is ≥ 3 µm. For example, the average length of the carbon nanotube clusters may be 3 µm, 4 µm, 5 µm, 6 µm, 7 µm, 8 µm, 9 µm, 10 µm, 12 µm, 14 µm, 16 µm, 18 µm, 20 µm, 25 µm, 30 µm, or within a range formed by any of the above values.

In some of the above embodiments, to form a long-range conductive network in the electrode active material layer, the average length of the carbon nanotube clusters may be ≥ 3 µm. It should be noted that, for those skilled in the art, the average length of the carbon nanotube clusters can be adjusted according to the thickness of the electrode active material layer and the particle size of the electrode active material. Generally, a longer average length facilitates the formation of a long-range conductive network. Thus, a more preferred average length L of the carbon nanotube clusters is ≥ 5 µm. However, if the average length is too long, agglomeration may occur, potentially leading to particle scratches or stable electrode protrusions during electrode preparation, which is detrimental to further processing and utilization of the electrode. Therefore, further preferable, the range for the average length L of the carbon nanotube clusters satisfies 5 µm ≤ L ≤ 30 µm.

It should be noted that, unless otherwise specified, the average length L of the carbon nanotube clusters as described in the present application refers to the average value of the lengths of the first 100 carbon nanotube clusters with longer lengths and the last 100 carbon nanotube clusters with longer lengths, as observed by SEM of the prepared electrode.

In some embodiments, a particle size Dv50 of the electrode active material and the average length L of the carbon nanotube clusters satisfy: L ≥ 0.2 × Dv50.

In some of the above embodiments, the relationship between the particle size of the electrode active material and the average length of the carbon nanotube clusters is further defined. It can be understood that the larger the particle size of the electrode active material, the longer the carbon nanotube clusters need to be to connect adjacent electrode active material particles in the conductive network. Additionally, the longer the average length, the more electrode active material particles the carbon nanotube cluster can connect, resulting in more conductive paths. Therefore, the average length of the carbon nanotube clusters should be no less than 0.2 times the particle size of the electrode active material to form a complete conductive network in the electrode active material layer.

It should be noted that in the present application, the particle size Dv50 of the electrode active material has a meaning well-known in the art, where Dv50 indicates that in the volume-based particle size distribution of the electrode active material, 50% of the particles have a particle size smaller than this value. The particle size Dv50 of the electrode active material can be measured using methods and instruments known in the art. For example, it may be measured by using a laser particle size analyzer (for example, Mastersizer 2000E made by Malvern Panalytical in the UK) in accordance with GB/T 190772016 Particle Size Analysis-Laser Diffraction Methods.

The electrode provided in the present application may include a current collector. The present application does not impose limitations on the current collector, which may be a metal foil, a porous metal plate, or a composite current collector. The composite current collector may include a polymer material base layer and a metal layer formed on at least one surface of the polymer material base layer. The composite current collector may be formed by forming a metal material (copper, copper alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)). As an example, when the electrode is a positive electrode for a lithium-ion battery, the positive electrode current collector is an aluminum foil.

In some embodiments, the current collector has two opposite surfaces in its thickness direction, and the electrode active material layer may be disposed on one surface of the current collector or on both surfaces simultaneously. For example, the current collector has two opposite surfaces in its thickness direction, and the negative electrode active material layer is disposed on either one or both of these opposite surfaces.

In some embodiments, the electrode active material may be a positive electrode active material or negative electrode active material commonly used in the field, with no particular restriction on its specific type.

For example, the positive electrode active material may include one or more of lithium transition metal oxide, olivine-structured lithium-containing phosphate, and their respective modified compounds. The modified compounds of the aforementioned positive electrode active materials may involve doping modification, surface coating modification, or both doping and surface coating modification. As an example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. As an example, the olivine-structured lithium-containing phosphate may include one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, and their modified compounds. These positive electrode active materials may be used individually or in combinations of two or more.

The negative electrode active material may include one or more of a carbonaceous material, a metal compound capable of alloying with lithium, metal oxide capable of being doped with lithium or metal oxide that is not doped with lithium, and a composite containing a metal compound and a carbonaceous material. As an example, the carbonaceous material may include one or more of artificial graphite, natural graphite, graphitized carbon fiber, and amorphous carbon; the metal compound capable of alloying with lithium may include one or more of silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, and an Al alloy; the metal oxide capable of being doped with lithium and metal oxide that is not doped with lithium may include one or more of SiOv (0 < v < 2), SnO₂, vanadium oxide, and lithium vanadium oxide; and the composite containing a metal compound and a carbonaceous material may include a SiC composite and/or a Sn-C composite. These negative electrode active materials may be used individually or in combinations of two or more.

In some embodiments, the conductive agent may further include a second conductive agent, the second conductive agent may include one or more of conductive carbon black, acetylene black, discrete carbon nanotubes, carbon fibers, Ketjen black, and graphene, and a mass percentage of the second conductive agent in the electrode active material layer is from 0.05% to 5%.

In some of the above embodiments, the second conductive agent may be further added on the basis of using carbon nanotube clusters as the conductive agent. Its role is that the carbon nanotube clusters can form a composite conductive network together with the second conductive agent, resulting in a more stable structure. Even during repeated charging and discharging, the conductive network can still remain stable. Additionally, the carbon nanotube clusters mainly ensure long-range electron conduction paths, while the second conductive agent can collect microcurrents from the electrode active material, ensuring short-range electron conduction paths. The two work synergistically to further enhance the conductivity of the electrode, prevent polarization, and improve electrical performance.

The second conductive agent may be selected from conductive agents commonly used in the prior art. Among them, point-type conductive agents, such as carbon black, can further reduce the resistance of the electrode and suppress damage to the electrode active material during electrode winding; surface-type conductive agents, such as graphene, can cooperate with carbon nanotube clusters to form a denser conductive network, further improving the conductivity of the electrode; and linear conductive agents, such as carbon nanotubes, can effectively collect microcurrents from the electrode active material while ensuring short-range electron conduction paths, thereby improving the conductivity of the electrode. Therefore, those skilled in the art can select one or more of the above materials as needed.

Those skilled in the art can control the mass percentage of the second conductive agent in the electrode active material layer to be from 0.05% to 5% based on actual conditions. For example, the mass percentage of the second conductive agent in the electrode active material layer may be 0.05%, 0.1%, 0.15%, 0.2%, 0.3%, 0.4%, 0.5%, 1%, 1.5%, 2%, 2.5%, 3%, 3.5%, 4%, 4.5%, 5%, or within a range composed of any of the above values.

In some embodiments, the electrode active material layer may further include a binder, and a mass percentage of the binder in the electrode active material layer is from 0.5% to 10%. The binder is used to ensure adhesion between electrode active material particles or between the electrode active material and the current collector, where common binders used in the art may be employed, with no particular limitation on the type. For example, the binder may include one or more of polyvinylidene fluoride-hexafluoropropylene copolymer, polyvinyl alcohol, polyacrylonitrile, starch, hydroxypropyl cellulose, regenerated cellulose, polyvinylpyrrolidone, tetrafluoroethylene, polyethylene, polypropylene, ethylenepropylene-diene monomer (EPDM), sulfonated EPDM, carboxymethyl cellulose, styrene-butadiene rubber, fluororubber, and various copolymers thereof. These binders may be used individually or in combinations of two or more.

Additionally, the addition amount of the binder may be adjusted based on actual needs. Those skilled in the art can minimize the addition amount of the binder while ensuring adhesion between electrode active material particles or between the electrode active material and the current collector, thereby ensuring the energy density of the electrode. Generally speaking, the mass percentage of the binder in the electrode active material layer is from 0.5% to 10%. For example, the mass percentage of the binder in the electrode active material layer may be 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or within a range composed of any of the above values.

In some embodiments, a porosity k of the electrode active material layer satisfies 10% ≤ k ≤ 35%. For example, the porosity k may be 10%, 15%, 20%, 25%, 30%, 35%, or within a range composed of any of the above values.

In some of the above embodiments, the electrode active material layer after coating is loose and porous, with large pores between various particles, which adversely affects the performance of the battery. Therefore, the coated electrode needs to be rolled to achieve a suitable porosity for the electrode active material. If the porosity is too high, the internal particles of the electrode are not in close contact, resulting in long ion and electron transport paths and high resistance, causing significant energy loss. If the porosity is too low, the electrolyte is not easily infiltrated, leading to difficulties in ion transport, which reduces the cycle performance and rate performance of the battery cell. The present application uses carbon nanotube clusters as a conductive agent, which can form a conductive network with good conductivity in the electrode active material layer, stably connecting the electrode active material and providing a stable conductive path. Therefore, the porosity of the electrode active material layer can be appropriately increased, thereby improving the electrolyte wettability of the electrode, enhancing ionic conductivity, reducing cycle capacity fade caused by electrode polarization, and improving the service life of the battery cell. The choice of porosity is related to the addition amount and aspect ratio of the carbon nanotube clusters, as well as the addition amount and particle size of the electrode active material. In some embodiments of the present application, controlling the porosity k of the electrode active material layer to satisfy 10% ≤ k ≤ 35% results in good conductivity. Further preferably, k satisfies 15% ≤ k ≤ 30%.

It should be noted that in the present application, the porosity k of the electrode active material layer has a meaning well-known in the art, and the porosity k of the electrode active material layer may be measured using methods and instruments known in the art. For example, pores are the spaces between material particles, and porosity refers to the percentage of the pore volume to the total volume of the material in its natural state. The porosity can be tested by the following method: First, punch the electrode into circular pieces with a diameter of 10 mm or 14 mm, ensuring a flat surface without notches or powder loss, with the number of small circular pieces being greater than 40. The thicknesses of the first active material layer and the second active material layer can be obtained by scanning the cross-section with an electron microscope. Then, based on the thickness of each layer, separate the two layers with different porosities, clean them with dimethyl carbonate and dry them, and subsequently use the gas displacement method to test and obtain the porosity of different active material layers of the electrode.

In some embodiments, the porosity k of the electrode active material layer, an average length L of the carbon nanotube clusters, and an average diameter D of the carbon nanotube clusters satisfy: L/D × k ≥ 0.5.

In some of the above embodiments, the relationship between the aspect ratio of the carbon nanotube clusters and the porosity k of the electrode active material layer is further defined. A higher aspect ratio of the carbon nanotube clusters is more conducive to forming a three-dimensional conductive network, thereby enhancing electron conduction paths and improving the conductivity of the electrode; a larger porosity is beneficial to improving the electrolyte wettability of the electrode, thus enhancing the ionic conductivity of the electrode. Therefore, when the product of the aspect ratio of the carbon nanotube clusters and the porosity is not less than 0.5, it can effectively reduce electrode polarization, thereby improving the rate performance and cycle performance of the electrode and enhancing the service life of the battery cell. Further preferably, 0.8 ≤ L/D × k ≤ 1.6.

### Method for manufacturing the electrode

The present application further provides a method for manufacturing an electrode, which may include the following steps:
S10: Prepare a dispersion of carbon nanotube clusters; and
S20: Add the dispersion of carbon nanotube clusters and an electrode active material to a solvent to prepare an electrode active material slurry.

In some embodiments, step S10 may specifically include:
S11: Add a conventional carbon nanotube raw material and a dispersant to a dispersion medium to obtain a mixed solution; and
S12: Apply shear force to the mixed solution to disperse the conventional carbon nanotube raw material, thereby obtaining a dispersion of carbon nanotube clusters.

In some embodiments, in step S11, the dispersion medium may include one or more of dimethylformamide (DMF), diethylformamide, dimethylacetamide (DMAc), N-methylpyrrolidone (NMP), and alcohols such as methanol, ethanol, 1-propanol, 2-propanol (isopropanol), 1-butanol (n-butanol), 2-methyl-1-propanol (isobutanol), 2-butanol (sec-butanol), 1-methyl-2-propanol (tert-butanol), pentanol, hexanol, heptanol, and octanol; glycols such as ethylene glycol, diethylene glycol, triethylene glycol, propylene glycol, 1,3-propanediol, 1,3-butanediol, 1,5-pentanediol, and hexanediol; and glycerol, trimethylolpropane, pentaerythritol, sorbitol, ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, tetraethylene glycol monobutyl ether, acetone, methyl ethyl ketone, methyl propyl ketone, cyclopentanone, ethyl acetate, γ-butyrolactone, and ε-caprolactone. These dispersion media may be used individually or in combinations of two or more. As an example, the dispersion medium may be N-methylpyrrolidone (NMP). The conventional carbon nanotube raw material and carbon nanotube clusters exhibit good dispersibility in the aforementioned dispersion media.

In some embodiments, in step S11, the dispersant may include one or more of hydrogenated nitrile butadiene rubber, polyvinylidene fluoride, and carboxymethyl cellulose. As an example, the dispersant may be hydrogenated nitrile butadiene rubber. The dispersant enhances the dispersion stability of the conventional carbon nanotube raw material and carbon nanotube clusters in the dispersion medium.

In some embodiments, in step S11, the conventional carbon nanotube raw material may be a bonded body or aggregate of carbon nanotube units. As an example, the conventional carbon nanotube raw material may be an aggregate of multi-walled carbon nanotube units.

In some embodiments, in step S11, the mass percentage of the conventional carbon nanotube raw material in the mixed solution may range from 1% to 4%. Under these conditions, the conventional carbon nanotube raw material disperses in the mixed solution at an appropriate level, forming carbon nanotube clusters of suitable specifications. As an example, the mass percentage of the conventional carbon nanotube raw material in the mixed solution may be 1.5%.

In some embodiments, in step S11, the mass ratio of the conventional carbon nanotube raw material to the dispersant may range from 1:0.1 to 10. Under these conditions, the conventional carbon nanotube raw material disperses in the mixed solution at an appropriate level, forming carbon nanotube clusters of suitable specifications while improving the dispersion stability of the carbon nanotube clusters. As an example, the mass ratio of the conventional carbon nanotube raw material to the dispersant may be 1:2.

In some embodiments, in step S11, the solid content of the mixed solution ranges from 1.5 wt% to 20 wt%. Under these conditions, the conventional carbon nanotube raw material disperses in the mixed solution at an appropriate level, forming carbon nanotube clusters of suitable specifications while improving the dispersion stability of the carbon nanotube clusters.

In some embodiments, in step S12, shear force may be applied to the mixed solution using a mixing device such as a homogenizer, bead mill, ball mill, sand mill, basket mill, attritor, universal mixer, clear mixer, spike mill, or TK mixer, or an ultrasonic dispersion device, to disperse the conventional carbon nanotube raw material and obtain a dispersion of carbon nanotube clusters. In particular, the ball milling method allows control over the diameter of the carbon nanotube clusters, thereby obtaining carbon nanotube clusters that meet the requirements of any embodiment of the first aspect of the present application.

In some embodiments, step S12 may specifically include: adding the mixed solution to a container containing milling balls and rotating the container to obtain a dispersion of carbon nanotube clusters,
where the average diameter of the milling balls may range from 0.5 mm to 2.5 mm, the rotation speed of the container may range from 500 rpm to 6000 rpm, and the ball milling duration may range from 0.5 h to 2 h. Under these conditions, the structure of the carbon nanotube units remains intact while the diameter of the carbon nanotube clusters can be appropriately controlled. The ball milling duration refers to the total time of ball milling; for example, if multiple ball milling sessions are performed, the duration is the sum of all sessions.

The above ball milling conditions are used to appropriately disperse the conventional carbon nanotube raw material, specifically excluding conditions that would disperse the conventional carbon nanotube raw material into carbon nanotube clusters with a diameter of 0.2 µm or less or into single-chain carbon nanotubes. In other words, the ball milling conditions are designed to appropriately disperse the conventional carbon nanotube raw material to form carbon nanotube clusters where carbon nanotube units are bonded side-by-side, resulting in a diameter greater than 0.2 µm. This can only be achieved by strictly controlling the composition of the mixed solution, the conditions of the dispersion process, and other factors.

It should be noted that the average diameter of the carbon nanotube clusters is primarily controlled by the average diameter of the milling balls, the rotation speed, and the ball milling duration. Generally, appropriately increasing the diameter of the milling balls while reducing the rotation speed and ball milling duration increases the average diameter of the carbon nanotube clusters, provided the conventional carbon nanotube raw material is successfully dispersed into carbon nanotube clusters. Additionally, the average length of the carbon nanotube clusters is primarily determined by the length of the carbon nanotube units in the conventional carbon nanotube raw material. Those skilled in the art can make corresponding selections and adjustments as needed.

In some embodiments, in step S20, the electrode active material slurry may further include the second conductive agent and/or the binder. It should be noted that the electrode active material, second conductive agent, and binder may be selected according to some embodiments of the first aspect. The solvent may include one or more of dimethylformamide (DMF), diethylformamide, dimethylacetamide (DMAc), N-methylpyrrolidone (NMP), and alcohols such as methanol, ethanol, 1-propanol, 2-propanol (isopropanol), 1-butanol (n-butanol), 2-methyl-1-propanol (isobutanol), 2-butanol (sec-butanol), 1-methyl-2-propanol (tert-butanol), pentanol, hexanol, heptanol, and octanol; glycols such as ethylene glycol, diethylene glycol, triethylene glycol, propylene glycol, 1,3-propanediol, 1,3-butanediol, 1,5-pentanediol, and hexanediol; and glycerol, trimethylolpropane, pentaerythritol, sorbitol, ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, tetraethylene glycol monobutyl ether, acetone, methyl ethyl ketone, methyl propyl ketone, cyclopentanone, ethyl acetate, γ-butyrolactone, and ε-caprolactone. These binders may be used individually or in combinations of two or more. The solvent may be the same as or different from the dispersion medium. As an example, the solvent may be N-methylpyrrolidone (NMP).

In some embodiments, the solid content of the electrode active material slurry ranges from 50 wt% to 80 wt%.

The method for manufacturing the electrode may further include: drying the electrode active material slurry to obtain an electrode active material layer. Specifically, the electrode active material layer may be formed by applying the electrode active material slurry onto a current collector and then drying the coated current collector, or by casting the electrode active material slurry onto a separate carrier and laminating the film separated from the carrier onto a current collector. If necessary, after forming the electrode active material layer by the above methods, a rolling process may be further performed. In this case, considering the physical properties of the final electrode, drying and rolling may be performed under appropriate conditions without particular limitation.

### Secondary battery

A second aspect of the present application provides a secondary battery including: a positive electrode, a negative electrode, a separator, and an electrolyte;
where at least one of the positive electrode or the negative electrode is an electrode according to any embodiment of the first aspect.

According to the present application, at least one of the positive electrode or the negative electrode of the secondary battery is an electrode according to any embodiment of the first aspect. Embodiments of the electrode have been described and explained in detail above, and thus are not repeated here. It can be understood that the secondary battery of the present application can achieve the beneficial effects of any embodiment of the electrode described above.

In some embodiments, the positive electrode is an electrode according to any embodiment of the first aspect.

In some embodiments, when the secondary battery is at 0% SOC, the resistance of the positive electrode is R₀, and when the secondary battery is at 100% SOC, the resistance of the positive electrode is R₁₀₀,
where R₀ and R₁₀₀ satisfy: (R₀ - R₁₀₀)/R₀ ≤ 30%.

In some of the above embodiments, due to differences in the state of charge of the secondary battery electrode, the volume of the electrode active material in the electrode active material layer changes, which affects the conductive network of the electrode active material layer. As a result, the resistance of the electrode changes significantly, increasing polarization and affecting the service life of the battery cell. It can be understood that the more stable the conductive network formed by the conductive agent, the smaller the resistance change rate of the electrode, the less the polarization, and the longer the battery cell life. When the electrode of the embodiments of the first aspect of the present application is used as the positive electrode, the resistance change rate of the positive electrode under different states of charge can be kept within 30%. Using the carbon nanotube clusters of the embodiments of the first aspect as a conductive agent can form a stable conductive network with good conductivity, so the conductivity of the electrode is less affected by volume changes of the electrode active material during charging and discharging, significantly reducing the resistance change rate of the electrode, reducing polarization, and improving the service life of the battery cell.

### [Separator]

The separator is disposed between the positive electrode and the negative electrode, primarily serving to prevent short-circuiting between the positive and negative electrodes while allowing active ions to pass through. The present application imposes no particular limitation on the type of separator, and any well-known porous separator with good chemical and mechanical stability may be used.

In some embodiments, the material of the separator may be selected from one or more of glass fiber, non-woven fabric, polyethylene, polypropylene, and polyvinylidene fluoride, but is not limited to these. Optionally, the material of the separator may include polyethylene and/or polypropylene. The separator may be a single-layer film or a multilayer composite film. When the separator is a multilayer composite film, all layers may be made of the same or different materials. In some embodiments, the separator may further include a ceramic coating or a metal oxide coating.

### [Electrolyte]

The electrolyte serves to conduct active ions between the positive electrode and the negative electrode. Electrolytes usable in the secondary battery of the present application may be those known in the prior art.

In some embodiments, the electrolyte may include an organic solvent, an electrolyte salt, and optional additives. The types of organic solvent, lithium salt, and additives are not specifically limited and may be selected according to needs.

In some embodiments, where the electrochemical device is a lithium-ion battery, the electrolyte salt may include a lithium salt. As an example, the lithium salt includes, but is not limited to, at least one of LiPF₆ (lithium hexafluorophosphate), LiBF₆ (lithium tetrafluoroborate), LiClO₄ (lithium perchlorate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalato)borate), LiPO₂F₂ (lithium difluorophosphate), LiDFOP (lithium difluorobis(oxalato)phosphate), or LiTFOP (lithium tetrafluoro(oxalato)phosphate). The above lithium salts may be used individually or in combinations of two or more.

In some embodiments, the electrochemical apparatus is a sodium-ion battery, and the electrolyte salt may include a sodium salt. As an example, the sodium salt may be selected from at least one of NaPF₆, NaClO₄, NaBCl₄, NaSO₃CF₃, or Na(CH₃)C₆H₄SO₃.

In some embodiments, as an example, the organic solvent includes, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), or diethyl sulfone (ESE). The above organic solvents may be used individually or in combinations of two or more. Optionally, the above organic solvents may be used in combinations of two or more.

In some embodiments, the additive may include a negative electrode film-forming additive, a positive electrode film-forming additive, or an additive that can improve some performance of the battery, for example, an additive for improving overcharge performance of the battery, an additive for improving high-temperature performance of the battery, and an additive for improving low-temperature performance of the battery.

As an example, the additive includes, but is not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propenesultone (PST), sulfonate cyclic quaternary ammonium salts, succinic anhydride, succinonitrile (SN), adiponitrile (AND), tris(trimethylsilyl) phosphate (TMSP), or tris(trimethylsilyl) borate (TMSB).

The electrolyte may be prepared according to conventional methods in the art. For example, the organic solvent, electrolyte salt, and optional additives may be mixed uniformly to obtain the electrolyte. There is no particular limitation on the order of addition of the materials. For instance, the electrolyte salt and optional additives may be added to the organic solvent and mixed uniformly to obtain the electrolyte; alternatively, the electrolyte salt may first be added to the organic solvent, followed by the addition of optional additives, and then the mixture is mixed uniformly to obtain the electrolyte.

### Electronic device

A third aspect of the present application provides an electronic device including the secondary battery of the second aspect of the present application.

The electronic device of the present application is not particularly limited and may be any electronic device known in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

The following describes examples of the present application. The examples described below are illustrative and only used for explaining the present application, and cannot be construed as limitations on the present application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Preparation of dispersion of carbon nanotube clusters

A conventional multi-walled carbon nanotube raw material, composed of multi-walled carbon nanotube units with an average diameter of 3 nm or more and an average length of 3 µm or more, and hydrogenated nitrile butadiene rubber were mixed in NMP to obtain a mixed solution, where the solid content of the mixed solution ranged from 1.5 wt% to 20 wt%, and the mass ratio of the conventional multi-walled carbon nanotube raw material to hydrogenated nitrile butadiene rubber ranged from 1:0.1 to 10.

The mixed solution was added to a container containing milling balls, and the container was rotated to obtain a dispersion of carbon nanotube clusters, where the average diameter of the milling balls ranged from 0.5 mm to 2.5 mm, the rotation speed of the container ranged from 500 rpm to 6000 rpm, and the ball milling duration ranged from 0.5 h to 2 h.

Dispersions of carbon nanotube clusters with different specifications were obtained and set aside by controlling the specifications of the conventional multi-walled carbon nanotube raw material and the ball milling conditions.

Lithium-ion battery charging rate test (that is, high-rate charging time): A finished battery cell was taken and discharged at 0.7C to a set value (3.0 V for a positive electrode active material of LCO) at 25°C. Then, it was charged at 6C to the cutoff voltage, followed by charging at the cutoff voltage until 0.05C. The total time of the entire charging process was recorded as T.

Test of steady-state internal resistance under a single cycle (Fresh Rss) and the 500-cycle steady-state impedance (Rcc) growth rate of a lithium-ion battery at 25°C:

A finished battery cell was tested at (25±3)°C as follows:
a. The cell rested for 2 hours, was fully charged at 0.5C to the cutoff voltage, and then charged at the cutoff voltage until 0.025C, followed by a 10-min rest.
b. The cell was discharged at 0.2C to the set value (3.0 V for LCO as the positive electrode active material), where the discharge capacity in this step was recorded as C1, followed by a 5-min rest.
c. The Chem.ID (depth of discharge (DOD)-voltage curve) of the cell was measured at a discharging rate of 0.1C1, including the point: voltage V₀ at 80% DOD.
d. {[The cell was charged at 1.5C to the cutoff voltage, then charged at the cutoff voltage until 0.05C, followed by a 5-min rest. It was discharged at 0.7C to release 80% of the rated capacity, and the voltage at this point was recorded as Vi. The internal resistance of the cell Rcc1 was calculated as (V₁ - V₀)/0.7C. Discharge continued to the set value (3.0 V for LCO as the positive electrode active material), followed by a 5-min rest.]

The process in [ ] was cycled 49 times, with the battery cell internal resistance at 80% rated capacity discharge recorded sequentially as Rec1, Rcc2, ..., Rcc49. In the 50th cycle, the cell was charged at 0.5C to the cutoff voltage, charged at the cutoff voltage until 0.05C, rested for 5 min, and discharged at 0.7C to the set value. The internal resistance at 80% rated capacity discharge was recorded as Rcc50.}

The process in { } was cycled 10 times plus one [ ] cycle.
e. Fresh Rss was defined as Rcc1. The steady-state internal resistance growth rate after 500 cycles was calculated as (Rec501/Rec1 - 100%).

Lithium-ion battery positive electrode resistance test at 0% SOC and 100% SOC:

A finished battery cell was tested at (25±3)°C as follows:
(1) The cell rested for 2 hours, was discharged at 0.2C to the full discharge set value (3.0 V for LCO as the positive electrode active material), and rested for 5 min. It was then charged at 0.5C to the cutoff voltage, charged at the cutoff voltage until 0.02C, and rested for 5 min.
(2) The cell was discharged at 0.1C to the full discharge set value, and the cutoff capacity in this step was recorded as C1.
(3) The cell was charged at 0.5C1 to the cutoff voltage, then charged at the cutoff voltage until 0.02C1.
(4) a. The cell was discharged at 0.5C1 until the remaining capacity was 80% C1, followed by a 30-min rest.
   b. The battery was disassembled to obtain the positive electrode plate, which was dried for 30 minutes in an environment with humidity ≤ 15%.
   c. The resistance of the positive electrode plate was tested using a membrane resistance meter at ≥ 15 locations, and the average resistance of all test points was recorded as the positive electrode resistance at 80% SOC.
   d. The positive electrode plate resistance at 0% remaining capacity was tested using the same method as steps a - c.

### Example 1

### Preparation of positive electrode:

A positive electrode active material, a carbon nanotube cluster dispersion, and polyvinylidene fluoride were mixed in NMP at a mass ratio of 97:1.4:1.6 to obtain a positive electrode active slurry. The positive electrode active material was lithium cobalt oxide (LCO) with a particle size Dv50 of 15 µm, and the solid content of the positive electrode active slurry was 72 wt%. The average diameter and average length of the carbon nanotube clusters, and average diameter of the carbon nanotube cluster units contained in the carbon nanotube clusters are shown in Table 1. The positive electrode active slurry was applied onto an aluminum foil, which was dried at 95°C, subjected to cold pressing, cutting, and slitting, and then dried under vacuum at 85°C for 4 hours, yielding a positive electrode with a porosity of 20%.

### Preparation of negative electrode:

An artificial graphite negative electrode active material, a conductive agent Super P, a thickener sodium carboxymethyl cellulose (CMC), and a binder styrene-butadiene rubber (SBR) in a mass ratio of 96.4:1.5:0.5:1.6 were mixed in deionized water to obtain a negative electrode active slurry, where the solid content of the negative electrode active slurry was 54 wt%. The negative electrode active slurry was applied onto copper foil, which was dried at 85°C, subjected to cold pressing, trimming, and slitting, and then dried under vacuum at 80°C for 12 hours to obtain a negative electrode.

### Preparation of electrolyte: A conventional 1.5 mol/L lithium hexafluorophosphate electrolyte was used.

### Preparation of separator: A 7 µm thick polyethylene (PE) separator substrate coated with a 3 µm ceramic coating was used.

Preparation of lithium-ion battery: The positive electrode, the separator, and the negative electrode were stacked in sequence so that the separator was disposed between the positive electrode plate and the negative electrode plate for separation. Then, the resulting stack was wound to form a jelly roll. After the tabs were welded, the jelly roll was placed in an outer packaging aluminum foil film. The prepared electrolyte was injected into the dried jelly roll, followed by processes such as vacuum packaging, standing, formation (0.02C constant current charging to 3.3V, then 0.1C constant current charging to 3.6V), shaping, capacity testing, and other processes to obtain a pouch lithium-ion battery.

### Examples 2 to 19

The preparation of the positive electrode was similar to Example 1, except that the average diameter and average length of the carbon nanotube clusters and the average diameter of the carbon nanotube cluster units contained in the carbon nanotube clusters were different, as shown in Table 1.

The preparation of the negative electrode, electrolyte, separator, and lithium-ion battery was identical to Example 1.

### Comparative Example 1

The preparation of the positive electrode was similar to Example 1, except that single-stranded multi-walled carbon nanotubes (obtained by fully dispersing conventional multi-walled carbon nanotubes raw material) replaced the carbon nanotube clusters. The average diameter of the single-stranded multi-walled carbon nanotubes is shown in Table 1.

The preparation of the negative electrode, electrolyte, separator, and lithium-ion battery was identical to Example 1.

### Comparative Example 2

The preparation of the positive electrode was similar to Embodiment 1, except that single-stranded single-walled carbon nanotubes (obtained by fully dispersing conventional single-walled carbon nanotube raw material) replaced the carbon nanotube clusters. The average diameter of the single-stranded single-walled carbon nanotubes is shown in Table 1.

The preparation of the negative electrode, electrolyte, separator, and lithium-ion battery was identical to Example 1.

### Comparative Example 3

The preparation of the positive electrode was similar to Example 1, except that single-walled carbon nanotube clusters (prepared from conventional single-walled carbon nanotube raw material instead of conventional multi-walled carbon nanotube raw material) replaced the carbon nanotube clusters. The average diameter and average length of the single-walled carbon nanotube clusters, and the average diameter of the carbon nanotube cluster units contained in the single-walled carbon nanotube clusters are shown in Table 1.

The preparation of the negative electrode, electrolyte, separator, and lithium-ion battery was identical to Example 1.

### Performance testing

Lithium-ion batteries from Examples 1 to 19 and Comparative Examples 1 to 3 were subjected to the following tests: charging rate test and 500-cycle Rcc growth rate test. The results are shown in Table 1.

**Table 1**

| | Average length L of carbon nanotube clusters L (µm) | Average diameter D of carbon nanotube clusters (µm) | Average diameter d of carbon nanotube units (nm) | 6C charging time (min) | 25°C Rcc growth rate @ 500 cls (%) |
|---|---|---|---|---|---|
| Example 1 | 3 | 0.5 | 15 | 32 | 15 |
| Example 2 | 5 | 0.5 | 15 | 31 | 15 |
| Example 3 | 7 | 0.5 | 15 | 30.5 | 12 |
| Example 4 | 10 | 0.5 | 15 | 30.5 | 12 |
| Example 5 | 20 | 0.5 | 15 | 30 | 10 |
| Example 6 | 30 | 0.5 | 15 | 30.5 | 12 |
| Example 7 | 50 | 0.5 | 15 | 32 | 15 |
| Example 8 | 70 | 0.5 | 15 | 33 | 17 |
| Example 9 | 10 | 0.2 | 15 | 34 | 20 |
| Example 10 | 10 | 1 | 15 | 30 | 10 |
| Example 11 | 10 | 2 | 15 | 29.5 | 8 |
| Example 12 | 10 | 3 | 15 | 29.5 | 8 |
| Example 13 | 10 | 5 | 15 | 29 | 8 |
| Example 14 | 10 | 0.5 | 3 | 33 | 17 |
| Example 15 | 10 | 0.5 | 5 | 29 | 8 |
| Example 16 | 10 | 0.5 | 10 | 29 | 8 |
| Example 17 | 10 | 0.5 | 20 | 31 | 15 |
| Example 18 | 10 | 0.5 | 30 | 33 | 17 |
| Example 19 | 10 | 0.5 | 40 | 35 | 20 |
| Comparative Example 1 | / | / | 15 | 37 | 35 |
| Comparative Example 2 | / | / | 1-2 | 36 | 35 |
| Comparative Example 3 | 10 | 0.1 | 1-2 | 35.5 | 35 |

From the results in Table 1, it can be seen that the lithium-ion batteries prepared in the examples exhibit significantly better charging rates and cycle performance compared to the comparative examples. This indicates that the carbon nanotube clusters used as conductive agents in the examples form a stable conductive network within the electrode, ensuring good conductivity of the electrode. Additionally, the 25°C Rcc growth rate @ 500 cls demonstrates that the conductive network formed by the carbon nanotube clusters can suppress volume changes in the active material in the electrode during charge-discharge cycles and effectively reduce the impact of volume changes in the active material on the conductivity of the electrode. Notably, Comparative Example 3, which used a carbon nanotube structure composed of bundled single-walled carbon nanotube units, shows poorer lithium-ion battery performance. This may be because the small diameter and high flexibility of single-walled carbon nanotube units make it difficult to form a structure with a larger diameter. Such a structure also has high flexibility, easily leading to aggregation and entanglement, and generally makes it difficult to form a stable long-range conductive network, resulting in inferior battery performance.

By comparing Examples 1 to 8, it can be seen that the average length of the carbon nanotube clusters affects the charging rate and cycle performance to a certain degree. The best performance of the lithium-ion battery was observed at an average length of 20 µm. This may be because longer carbon nanotubes form a more stable long-range conductive network with better conductivity, while excessively long carbon nanotube clusters may distribute unevenly in the electrode, leaving some areas of the electrode not covered with the conductive network, thus reducing performance.

By comparing Examples 4 and 9 to 13, it can be seen that the average diameter of the carbon nanotube clusters also impacts charging rate and cycle performance. The best performance occurs when the average diameter is 2 µm or higher, with further increases having little additional effect on lithium-ion battery performance. It should be noted that in Example 9, the average diameter of the carbon nanotube clusters was 0.2 µm, because the diameters of all the carbon nanotube clusters in Example 9 were approximately 0.2 µm. Although the protected carbon nanotube cluster diameter in the present application should be greater than 0.2 µm, for comparison purposes, structures with diameters of 0.18 µm or more, composed of bundled multi-walled carbon nanotube units, were considered carbon nanotube clusters, resulting in an average diameter of 0.2 µm.

By comparing Examples 4 and 14 to 19, it can be seen that the average diameter of the carbon nanotube units composing the carbon nanotube clusters also affects lithium-ion battery performance. The best performance of the lithium-ion battery occurs when the average diameter of the carbon nanotube units is between 5 nm and 10 nm. This may be because carbon nanotube units with excessively small diameters form many carbon nanotube clusters that are entangled rather than aligned side by side, reducing conductivity of the carbon nanotube clusters, while overly large diameters decrease the electron conduction pathways, also impairing conductivity of the carbon nanotube clusters.

### Example 20

The preparation of the positive electrode was similar to Example 4, except that the positive electrode active material was nickel cobalt manganese oxide (NCM) with a particle size Dv50 of 15 µm.

The preparation of the negative electrode, electrolyte, separator, and lithium-ion battery was identical to Example 1.

### Example 21

The preparation of the positive electrode was similar to Example 9, except that the positive electrode active material was lithium manganese oxide (LMO) with a particle size Dv50 of 15 µm.

The preparation of the negative electrode, electrolyte, separator, and lithium-ion battery was identical to Example 1.

### Example 22

The preparation of the positive electrode was similar to Example 12, except that the positive electrode active material was a 1:1 mass ratio mixture of lithium cobalt oxide (LCO) and nickel cobalt manganese oxide (NCM) with a particle size Dv50 of 15 µm.

The preparation of the negative electrode, electrolyte, separator, and lithium-ion battery was identical to Example 1.

### Comparative Example 4

The preparation of the positive electrode was similar to Comparative Example 2, except that the positive electrode active material was nickel cobalt manganese oxide (NCM) with a particle size Dv50 of 15 µm.

The preparation of the negative electrode, electrolyte, separator, and lithium-ion battery was identical to Example 1.

### Comparative Example 5

The preparation of the positive electrode was similar to Comparative Example 3, except that the positive electrode active material was lithium manganese oxide (LMO) with a particle size Dv50 of 15 µm.

The preparation of the negative electrode, electrolyte, separator, and lithium-ion battery was identical to Example 1.

### Comparative Example 6

The preparation of the positive electrode was similar to Comparative Example 3, except that the positive electrode active material was a 1:1 mass ratio mixture of lithium cobalt oxide (LCO) and nickel cobalt manganese oxide (NCM) with a particle size Dv50 of 15 µm.

The preparation of the negative electrode, electrolyte, separator, and lithium-ion battery was identical to Example 1.

### Performance testing:

Lithium-ion batteries from Examples 1 to 3, 20 to 22, and Comparative Examples 1, 4 to 6 were tested for positive electrode resistance at 0% SOC (R0) and 100% SOC (R100). The results are shown in Table 2.

**Table 2**

| | Positive electrode active material | R₀ (Ω) | R₁₀₀ (Ω) | (R₀ - R₁₀₀)/R₀ (%) |
|---|---|---|---|---|
| Example 1 | LCO | 0.22 | 0.16 | 26 |
| Example 2 | LCO | 0.18 | 0.15 | 17 |
| Example 3 | LCO | 0.16 | 0.15 | 9 |
| Example 20 | NCM | 0.53 | 0.42 | 21 |
| Example 21 | LMO | 0.45 | 0.34 | 24 |
| Example 22 | LCO + NCM | 0.32 | 0.26 | 19 |
| Comparative Example 1 | LCO | 0.54 | 0.30 | 45 |
| Comparative Example 4 | NCM | 0.63 | 0.42 | 33 |
| Comparative Example 5 | LMO | 0.58 | 0.37 | 36 |
| Comparative Example 6 | LCO + NCM | 0.45 | 0.29 | 36 |

From the results in Table 2, it can be seen that for different types of positive electrode active materials, when carbon nanotube clusters are used as the conductive agent, the resistance change rate of the positive electrode under different states of charge does not exceed 30%, with effects significantly better than those of the comparative examples. This indicates that the carbon nanotube clusters provided by the present application can form a stable conductive network for various existing positive electrode active materials, reducing the impact of the state of charge on electrode resistance, thereby reducing polarization and improving the service life of the lithium-ion battery.

### Example 23

The preparation of the positive electrode was similar to Example 1, except that the average diameter and average length of the carbon nanotube clusters were different, as shown in Table 3.

The preparation of the negative electrode, electrolyte, separator, and lithium-ion battery was identical to Example 1.

### Example 24

The preparation of the positive electrode was similar to Example 1, except that the average diameter and average length of the carbon nanotube clusters were different, as shown in Table 3.

The preparation of the negative electrode, electrolyte, separator, and lithium-ion battery was identical to Example 1.

### Example 25

The preparation of the positive electrode was similar to Example 1, except that the average diameter and average length of the carbon nanotube clusters were different, as shown in Table 3.

The preparation of the negative electrode, electrolyte, separator, and lithium-ion battery was identical to Example 1.

### Example 26

The preparation of the positive electrode was similar to Example 1, except that the average diameter and average length of the carbon nanotube clusters were different, as shown in Table 3.

The preparation of the negative electrode, electrolyte, separator, and lithium-ion battery was identical to Example 1.

### Example 27

The preparation of the positive electrode was similar to Example 1, except that the average diameter and average length of the carbon nanotube clusters were different, as shown in Table 3.

The preparation of the negative electrode, electrolyte, separator, and lithium-ion battery was identical to Example 1.

### Example 28

The preparation of the positive electrode was similar to Example 1, except that the average diameter and average length of the carbon nanotube clusters were different, as shown in Table 3.

The preparation of the negative electrode, electrolyte, separator, and lithium-ion battery was identical to Example 1.

### Example 29

The preparation of the positive electrode was similar to Example 27, except that the porosity was different, at 10%, as shown in Table 3.

The preparation of the negative electrode, electrolyte, separator, and lithium-ion battery was identical to Example 1.

### Example 30

The preparation of the positive electrode was similar to Example 27, except that the porosity was different, at 15%, as shown in Table 3.

The preparation of the negative electrode, electrolyte, separator, and lithium-ion battery was identical to Example 1.

### Example 31

The preparation of the positive electrode was similar to Example 27, except that the porosity was different, at 30%, as shown in Table 3.

The preparation of the negative electrode, electrolyte, separator, and lithium-ion battery was identical to Example 1.

### Example 32

The preparation of the positive electrode was similar to Example 27, except that the porosity was different, at 35%, as shown in Table 3.

The preparation of the negative electrode, electrolyte, separator, and lithium-ion battery was identical to Example 1.

### Performance testing:

The positive electrodes of the lithium-ion batteries obtained from Examples 23 to 32 and Comparative Example 1 were subjected to the Fresh Rss test, with results shown in Table 3.

**Table 3**

| | Porosity k (%) | Average length L of carbon nanotube clusters (µm) | Average diameter D of carbon nanotube clusters (µm) | L/D × k | Fresh Rss (mΩ) |
|---|---|---|---|---|---|
| Example 23 | 20 | 1 | 1 | 0.2 | 28 |
| Example 24 | 20 | 1 | 0.5 | 0.4 | 24 |
| Example 25 | 20 | 2 | 0.5 | 0.8 | 22 |
| Example 26 | 20 | 4 | 0.5 | 1.6 | 20 |
| Example 27 | 20 | 4 | 1 | 0.8 | 20 |
| Example 28 | 20 | 4 | 2 | 0.4 | 23 |
| Example 29 | 10 | 4 | 1 | 0.4 | 23 |
| Example 30 | 15 | 4 | 1 | 0.6 | 24 |
| Example 31 | 30 | 4 | 1 | 1.2 | 21 |
| Example 32 | 35 | 4 | 1 | 1.4 | 23 |
| Comparative Example 1 | 20 | / | | | 28 |

From the results in Table 3, by comparing Examples 23 to 28 with Comparative Example 1, it can be seen that under a constant porosity condition, the larger the aspect ratio of the carbon nanotube clusters, the smaller the resistance of the positive electrode. This may be because a higher aspect ratio of the carbon nanotube clusters is more conducive to forming a three-dimensional conductive network, thereby enhancing electron conduction paths and improving the conductivity of the electrode.

By comparing Examples 27 and 29 to 32, it can be seen that since carbon nanotube clusters with a larger aspect ratio can directly form a stable three-dimensional conductive network, the porosity of the positive electrode can be appropriately increased. A larger porosity is beneficial to improving the electrolyte wettability of the electrode, thereby enhancing the ionic conductivity of the electrode. However, the porosity should not be too large, preferably not exceeding 30%.

### Examples 33 to 41

The preparation of the positive electrode was similar to Example 1, except that the average length of the carbon nanotube clusters and/or the particle size Dv50 of the positive electrode active material lithium cobalt oxide (LCO) were different, as shown in Table 4.

The preparation of the negative electrode, electrolyte, separator, and lithium-ion battery was identical to Example 1.

### Performance testing

The lithium-ion batteries obtained from Examples 33 to 41 were subjected to the following tests: charging rate test and 500-cycle Rcc growth rate test, with results shown in Table 4. Additionally, the results from Examples 1, 2, and 4 in Table 1 are recorded in Table 4 for comparison.

**Table 4**

| | Particle size Dv50 of positive electrode active material lithium cobalt oxide (µm) | 0.2 × Dv50 (µm) | Average length of carbon nanotube clusters (µm) | 6C charging time (min) | 25°C Rcc growth rate @ 500 cls (%) |
|---|---|---|---|---|---|
| Example 1 | 15 | 3 | 3 | 32 | 15 |
| Example 2 | 15 | 3 | 5 | 31 | 15 |
| Example 4 | 15 | 3 | 10 | 30.5 | 12 |
| Example 33 | 10 | 2 | 3 | 31.5 | 18 |
| Example 34 | 10 | 2 | 5 | 30 | 15 |
| Example 35 | 10 | 2 | 8 | 29.5 | 13 |
| Example 36 | 5 | 1 | 1 | 30 | 22 |
| Example 37 | 5 | 1 | 3 | 29.5 | 20 |
| Example 38 | 5 | 1 | 6 | 29 | 15 |
| Example 39 | 5 | 1 | 0.5 | 37 | 35 |
| Example 40 | 10 | 2 | 1 | 37 | 35 |
| Example 41 | 15 | 3 | 2 | 37 | 35 |

From the results in Table 4, it can be seen that when the average length of the carbon nanotube clusters in the examples is not less than 0.2 times the particle size of the positive electrode active material, the charging performance and cycle performance are better. This is because the primary role of the conductive network formed by the carbon nanotube clusters is to facilitate electron transfer between active material particles. Therefore, the conductivity of the electrode is significantly related to the average length of the carbon nanotube clusters and the particle size of the positive electrode active material. When the average length of the carbon nanotube clusters is greater than 0.2 times the particle size of the positive electrode active material, the carbon nanotube clusters can form a stable conductive network, thereby reducing electrode polarization and improving the charging performance and cycle performance of the lithium-ion battery.

It should be noted that in absence of conflicts, some embodiments and features in some embodiments in the present application may be combined with each other.

In conclusion, it should be noted that the foregoing embodiments are merely intended for describing the technical solutions of the present application, but not for limiting the present application. Although the present application is described in detail with reference to the foregoing embodiments, persons of ordinary skills in the art should understand that they may still make modifications to the technical solutions described in the foregoing embodiments or make equivalent replacements to some technical features thereof, without departing from the spirit and scope of the technical solutions of embodiments of the present application.

## Claims

1. An electrode, comprising: an electrode active material layer, the electrode active material layer comprising an electrode active material and a conductive agent,
wherein the conductive agent comprises carbon nanotube clusters, the carbon nanotube clusters being composed of a plurality of bundled carbon nanotube units, and a diameter of the carbon nanotube clusters being > 0.2 µm.

2. The electrode according to claim 1, wherein a mass percentage of the carbon nanotube clusters in the electrode active material layer is from 0.05% to 5%.

3. The electrode according to claim 1, wherein an average diameter d of the carbon nanotube units satisfies 3 nm ≤ d ≤ 40 nm;
optionally, the average diameter d of the carbon nanotube units satisfies 5 nm ≤ d ≤ 20 nm; and
optionally, the average diameter d of the carbon nanotube units satisfies 5 nm ≤ d ≤ 10 nm.

4. The electrode according to claim 1 or 3, wherein the carbon nanotube units are multi-walled carbon nanotube units.

5. The electrode according to claim 1, wherein an average diameter D of the carbon nanotube clusters is ≥ 0.5 µm; and
optionally, the average diameter D of the carbon nanotube clusters satisfies 0.5 µm ≤ D ≤ 3 µm.

6. The electrode according to claim 1, wherein an average length L of the carbon nanotube clusters is ≥ 3 µm;
optionally, the average length L of the carbon nanotube clusters is ≥ 5 µm; and
optionally, the average length L of the carbon nanotube clusters satisfies 5 µm ≤ L ≤ 30 µm.

7. The electrode according to claim 1, wherein a particle size Dv50 of the electrode active material and the average length L of the carbon nanotube clusters satisfy: L ≥ 0.2 × Dv50.

8. The electrode according to claim 1, wherein the conductive agent further comprises a second conductive agent, the second conductive agent comprising one or more of conductive carbon black, acetylene black, carbon nanotubes, carbon fibers, Ketjen black, and graphene, and a mass percentage of the second conductive agent in the electrode active material layer is from 0.05% to 5%.

9. The electrode according to claim 1, wherein the electrode active material layer further comprises a binder, and a mass percentage of the binder in the electrode active material layer is from 0.5% to 10%.

10. The electrode according to claim 1, wherein a porosity k of the electrode active material layer satisfies 10% ≤ k ≤ 35%; and
optionally, the porosity k of the electrode active material layer satisfies 15% ≤ k ≤ 30%.

11. The electrode according to claim 10, wherein the porosity k of the electrode active material layer, an average length L of the carbon nanotube clusters, and an average diameter D of the carbon nanotube clusters satisfy: L/D × k ≥ 0.5, optionally, 0.8 ≤ L/D × k ≤ 1.6.

12. A secondary battery, comprising: a positive electrode, a negative electrode, a separator, and an electrolyte;
wherein at least one of the positive electrode or the negative electrode is the electrode according to any one of claims 1 to 11.

13. The secondary battery according to claim 12, wherein the positive electrode is the electrode according to any one of claims 1 to 8.

14. The secondary battery according to claim 13, wherein, when the secondary battery is at 0% SOC, a resistance of the positive electrode is R₀, and when the secondary battery is at 100% SOC, the resistance of the positive electrode is R₁₀₀,
wherein R₀ and R₁₀₀ satisfy: (R₀ - R₁₀₀)/R₀ ≤ 30%.

15. An electronic device, comprising: a secondary battery according to any one of claims 12 to 14.
